(19) Europäisches Patentamt

European Patent Office

Office européen des brevets

(11) Veröffentlichungsnummer: **0 422 330 A1**

(12) **EUROPÄISCHE PATENTANMELDUNG**

(21) Anmeldenummer: **90108322.0**

(22) Anmeldetag: **02.05.90**

(51) Int. Cl.⁵: **A22C 11/00, B65G 19/02**

(30) Priorität: **13.10.89 DE 8912219 U**

(43) Veröffentlichungstag der Anmeldung:
**17.04.91 Patentblatt 91/16**

(84) Benannte Vertragsstaaten:
**AT CH DE ES FR GB IT LI SE**

(71) Anmelder: **Albert Handtmann**
**Maschinenfabrik GmbH & Co. KG**
**Birkenallee 25-29**
**W-7950 Biberach a.d. Riss 1(DE)**

(72) Erfinder: **Müller, Gerhard**
**Rosenweg 22**
**W-7957 Schemmerhofen(DE)**
Erfinder: **Hermann, Albert**
**Neue Heimat 38**
**W-7950 Biberach/Riss(DE)**

(74) Vertreter: **Patentanwälte Grünecker,**
**Kinkeldey, Stockmair & Partner**
**Maximilianstrasse 58**
**W-8000 München 22(DE)**

(54) **Vorrichtung zum Transport von in einer zusammenhängenden Wursthülle eingefüllten Würsten.**

㉗ Die Erfindung beschäftigt sich mit einer Vorrichtung zum Transport von in einer zusammenhängenden Wursthülle eingefüllten Würsten durch Aufhängen derselben in Schleifenform an Aufnahmehaken (9). Solche Vorrichtungen haben in der Regel den Zweck, solche Würste in Kettenform so vorzubereiten und aufzuhängen, daß sie auf einen Rauchstab übergeben werden können, mit welchem dann eine entsprechend lange Wurstkette in einer Räuchervorrichtung aufgehängt werden kann.

Eine solche Vorrichtung, bei welcher die Aufnahmehaken (9) in Abstand zueinander mit einem endlosen, über zwei Umlenkräder (2, 3) umlaufenden angetriebenen Transportband (1) verbunden sind, wobei die Haken (9) im Bereich des einen Trums (10) des Transportbandes (Fördertrum) mit den Wurstschleifen beladen sind und im Bereich des anderen Trums (Leertrum) (11) leer zurücklaufen, soll die durch Schleifen gebildete Wurstkette je nach Größe und Beschaffenheit in größeren oder kleineren Abständen der Schleifen zueinander aufgehängt und transportiert werden können. Zu diesem Zweck sind die Haken (9) mit dem Transportband (1) im Bereich des Fördertrums (10) formschlüssig und im Bereich des Leertrums (11) kraftschlüssig verbunden.

FIG.1

# VORRICHTUNG ZUM TRANSPORT VON IN EINER ZUSAMMENHÄNGENDEN WURSTHÜLLE EINGEFÜLLTEN WÜRSTEN

Die Erfindung betrifft eine Vorrichtung zum Transport von in einer zusammenhängenden Wursthülle eingefüllten Würsten durch Aufhängen derselben in Schleifenform an Aufnahmehaken, die in Abstand zueinander mit einem endlosen, über zwei Umlenkräder umlaufenden angetriebenen Transportband verbunden sind, wobei die Haken im Bereich des einen Trums des Transportbandes (Fördertrum) mit den Wurstschleifen beladen sind und im Bereich des anderen Trums (Leertrum) leer zurücklaufen.

Solche Vorrichtungen haben in der Regel den Zweck, solche Würste in Kettenform so vorzubereiten und aufzuhängen, daß sie auf einen Rauchstab übergeben werden können, mit welchem dann eine entsprechend lange Wurstkette in einer Räuchervorrichtung aufgehängt werden kann.

Bei einer bekannten Vorrichtung dieser Art sind die Haken an dem Förderband fest angeordnet, d.h. sie sind in ihren Abständen zueinander nicht veränderbar. (DE-OS 26 10 315)

Der Erfindung liegt die Aufgabe zugrunde, eine solche Vorrichtung so auszubilden, daß mit ihr die durch Schleifen gebildete Wurstkette je nach Größe und Beschaffenheit in größeren oder kleineren Abständen der Schleifen zueinander aufgehängt und transportiert werden kann.

Zur Lösung dieser Aufgabe sieht die Erfindung bei einer Vorrichtung nach dem Oberbegriff des Anspruches 1 vor, daß die Haken mit dem Transportband im Bereich des Fördertrums formschlüssig und im Bereich des Leertrums kraftschlüssig verbunden sind.

Durch diese Maßnahme ist es mit einfachen Mitteln ermöglicht, im Bereich des Leertrums die Abstände zwischen den Haken zu verändern, wenn beispielsweise eine andere Wurstsorte hergestellt wird, bei welcher größere oder kleinere Abstände der Schleifen vorteilhaft sind. Die Haken lassen sich im Bereich des Leertrums mit Rücksicht auf die kraftschlüssige Verbindung mit dem Transportband in die jeweils günstigsten Abstände verschieben. Solang jedoch nur eine bestimmte Wurstsorte hergestellt wird, bleiben die Abstände zwischen den Haken unverändert.

Ein bezüglich Aufbau und Handhabung der Vorrichtung besonders günstige Ausgestaltung kann in der Weise erzielt werden, daß die Haken bei ihrem Umlauf in einer endlosen feststehenden Führungsbahn zwangsgeführt sind, daß ferner das Transportband aus einem Formschlußband mit nach außen ragenden Vorsprüngen und einem seitlich dazu versetzten glatten Kraftschlußband besteht, wobei die Haken im Bereich des Fördertrums gegen das Formschlußband gepreßt und damit gekuppelt und im Bereich des Leertrums außer Eingriff mit dem Formschlußband, jedoch an das Kraftschlußband angedrückt sind.

Der Formschluß zwischen dem Transportband und dem Haken sowie der Kraftschluß zwischen diesen beiden Konstruktionsteilen kann auf eine besonders einfache Weise erzielt werden, wenn das Formschlußband als Zahnriemen mit nach außen ragenden Zähnen ausgebildet ist, wenn ferner jeder Haken einen Kupplungsteil aufweist, der im Bereich des Zahnriemens eine Kupplungsverzahnung und im Bereich des glatten Kraftschlußbandes einen Magnet aufweist, wobei das Kraftschlußband durch ein Stahlband unterstützt ist.

Diese Maßnahmen erlauben, daß der Bereich des Leertrums als Speicher für die Haken dient, indem am Ende des Leertrums vor dem Umlenkrad eine Sperrvorrichtung angeordnet ist. Auf diese Art und Weise kann ein Vorrat von Haken im Bereich des Leertrumes vorhanden sein, so daß auch beim Einstellen eines verhältnismäßig kleinen Abstandes zwischen den Haken eine ausreichende Zahl Haken in den Bereich des Formschlußbandes eingeschleust werden kann.

Wenn dabei die Sperrvorrichtung als Vereinzeleinrichtung ausgebildet ist, so kann das Einschleusen im Takt durch eine Steuerungseinrichtung erfolgen, welche die Sperre im vorgewählten Takt aufhebt und wieder einschaltet. Eine besonders einfache Steuerung kann erzielt werden, wenn die Steuerungseinrichtung einen Elektromagneten aufweist, dessen Hubkern mit einem Sperrarm in Verbindung steht.

Die Zwangsführung der Haken im Bereich des Fördertrums kann derart ausgebildet sein, daß die endlose feststehende Führungsbahn in einem Führungskörper eingearbeitet ist und aus einer oberen Führungsnut und einer damit fluchtenden unteren Führungsnut besteht, wobei der Kupplungsteil jedes Hakens zwei gegenüberliegend angebrachte Führungsstifte aufweist, von welchen jeder mit der ihm zugeordneten Führungsnut im Eingriff ist. Die Führungsbahnen können auch aus mehreren Teilen bestehen.

Ein besonders leichter Lauf der Transportbahn kann in der Weise erzielt werden, daß am Führungskörper, neben den Führungsnuten glatte Laufbahnen vorgesehen sind, auf welchen sich am Kupplungsteil der Haken gelagerte glatte Laufräder abstützen. Auf diese Art und Weise ist eine seitliche Verschiebung der Haken infolge der Zwangsführung ermöglicht, wobei aber die Zwangsführung in ihrer Funktion dadurch nicht behindert ist. Die Laufräder können aus Kunststoff gefertigt sein, so daß sich ein besonders ruhiger Lauf der Transportbahn erzielen läßt.

Um bei längeren Transportbändern zu verhindern, daß diese insbesondere im Bereich des Formschlußtrumes ausweichen können, kann der Führungskörper umlaufende Führungsnuten zum Abstützen des Formschlußbandes und ggf. des Kraftschlußbandes aufweisen, so daß der Formschluß mit Sicherheit gewährleistet bleibt.

Zum Antrieb des Transportbandes kann vorgesehen sein, daß jedes Umlenkrad aus einem auf einer aufrechten Hauptachse befestigten, das mit einer Innenverzahnung versehene Formschlußband antreibenden Zahnrad und einer das Kraftschlußband antreibenden Scheibe besteht, die auf einer eigenen aufrechten Nebenachse befestigt ist, die gegenüber der Hauptachse in Richtung zum Leertrum versetzt ist.

Das Maß der Vesetzung wird durch den Verlauf der Führungsbahn bestimmt.

Ein sehr einfacher Antrieb dieses Umlenkrades ergibt sich, wenn die Hauptachse angetrieben ist, während das Zahnrad mittels eines in eine Ausnehmung der Scheibe eingreifenden Mitnehmerstiftes die Scheibe in Drehung versetzt. Dabei ist die Ausnehmung als Langloch ausgebildet, um eine Relativbewegung des Mitnehmerstiftes zur Ausnehmung zu ermöglichen.

Die Vorrichtung kann automatisch den Abstand zwischen den Haken richtig einstellen, wenn die Steuerungseinrichtung durch geeignete Parameter gesteuert wird, z.B. dem Kaliber oder/und der Länge der Würste.

Eine einfachere Ausbildung der Vorrichtung nach dem Oberbegriff des Anspruches 1 kann bereitgestellt werden, wenn das Einschleusen der Haken in das Formschlußband von Hand erfolgt. Eine solche einfache Vorrichtung stimmt mit der vorstehend beschriebenen Vorrichtung weitgehend überein, d.h. auch hier sind die Haken bei ihrem Umlauf in einer endlosen feststehenden Führungsbahn zwangsgeführt, wobei das Transportband als Zahnriemen mit nach außen ragenden Zähnen ausgebildet ist und jeder Haken einen Kupplungsteil mit einer Kupplungsverzahnung aufweist, die mit dem Transportband zusammenwirkt, wobei jedoch jeder Haken im Bereich des Leertrumes aus der endlosen feststehenden Führungsbahn herausnehmbar und wieder einsetzbar ausgebildet ist. Dabei kann im Bereich des Leertrums des Transportbandes eine Ausnehmung in der Führungsbahn vorgesehen sein.

Es wäre aber auch möglich, die in den Führungsnuten geführten Führungsstifte gegen die Kraft einer Feder zurückziehen zu können. Auch wäre es möglich, die Führungsnuten in der Führungsbahn nur auf der oberen Seite des Führungskörpers anzuordnen, so daß jeder Haken dann abgehoben werden könnte.

Wenn bei dieser vereinfachten Vorrichtung wie bei der automatischen Vorrichtung am Führungskörper neben den Führungsnuten Laufbahnen vorgesehen sind, auf welchen sich am Kupplungsteil der Haken gelagerte Laufräder abstützen, so können die Laufbahnen in Nutenform ausgebildet sein, so daß die Laufräder die Führungsfunktion übernehmen und gesonderte Führungsnuten entbehrlich sind.

Eine besonders einfache Ausgestaltung des Transportbandes kann in der Weise erzielt werden, daß mindestens eines der Umlenkräder als Zahnrad ausgebildet ist, wobei das als Zahnriemen ausgebildete Transportband auch mit einer Innenverzahnung versehen ist, die mit dem Umlenk-Zahnrad kämmt.

Weitere Merkmale und Vorteile der Erfindung ergeben sich aus der nachfolgenden Beschreibung in Verbindung mit der Zeichnung, in welcher Ausführungsbeispiele der Erfindung schematisch dargestellt sind.

Dabei zeigen:

Figur 1 eine Draufsicht auf die Vorrichtung in schematischer Darstellung,

Figur 2 einen Querschnitt der Vorrichtung zwischen den beiden Umlenkrädern,

Figur 3 einen Querschnitt durch ein Umlenk-Zahnrad,

Figur 4 einen Querschnitt durch ein Umlenkrad der Vorrichtung in der einfachen Ausführung,

Figur 5 eine Teilseitenansicht der Vorrichtung mit einer anderen Führung für die Haken,

Figur 6 einen Schnitt nach der Linie VI-VI der Figur 5 und

Figur 7 eine Draufsicht auf die Vorrichtung nach Figur 5.

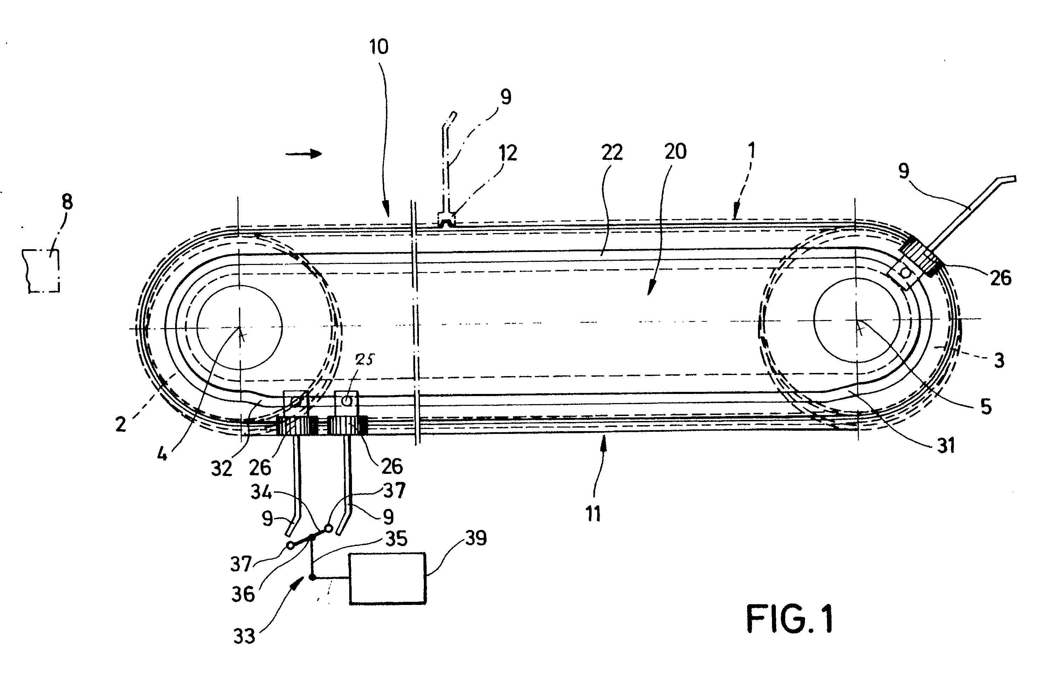

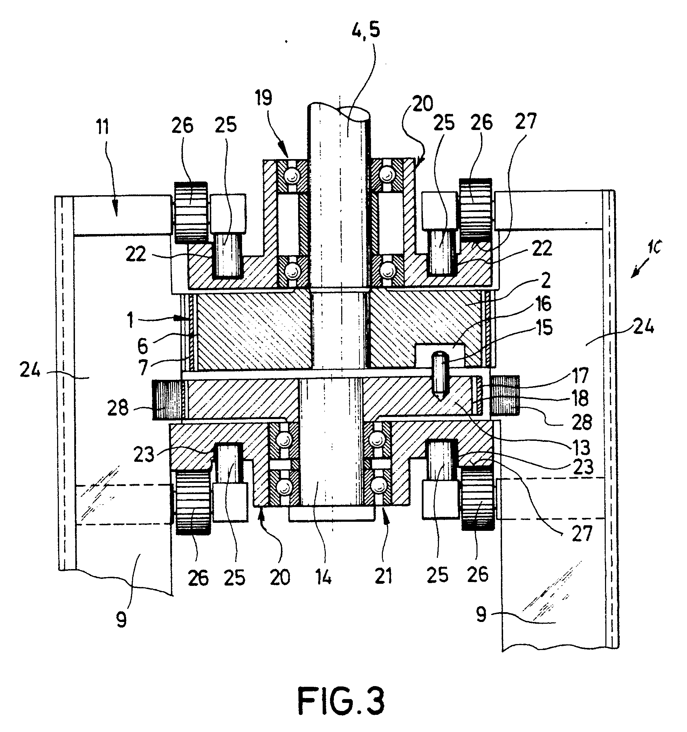

Wie aus den Figuren 1 und 3 ersichtlich, weist die Vorrichtung ein endloses Transportband 1 auf, das um Umlenkräder 2 und 3 geführt ist, die im gezeichneten Ausführungsbeispiel mittels aufrechter Achsen 4 und 5 drehbar gelagert sind.

Das Transportband ist als Zahnriemen ausgebildet, der einerseits eine Innenverzahnung 6 und andererseits eine Außenverzahnung 7 aufweist (Figur 3). Das Transportband 1 greift mit der Innenverzahnung 6 in die als Zahnräder ausgebildeten Umlenkräder 4 und 5 ein.

In Figur 1 ist auf der linken Seite ein Füllrohr 8 strichpunktiert angedeutet, aus welchem die Würste austreten. Sie werden von Haken 9 in Pfeilrichtung - in Schleifen aufgehängt - im Bereich des Fördertrums 10 transportiert. Die im Bereich des Fördertrums an den Haken 9 hängenden Wurstschleifen werden an einen Rauchstab übergeben und mit diesem abgenommen, so daß die Haken nach der Umlenkung durch das Umlenkrad 3 zum Trum 11 gelangen, in dessen Bereich die Haken leer sind.

Jeder Haken weist an der dem Transport 1 zugewandten Seite eine Kupplungsverzahnung 12 auf, mit welcher jeder Haken auf der Seite des Fördertrums in die Außenverzahnung 7 des Transportbandes 1 eingreift und so formschlüssig mit diesem verbunden ist.

Wie aus Figur 3 ersichtlich ist, befindet sich unter dem Umkehrzahnrad 2 eine Scheibe 13, die an einer aufrechten Achse 14 befestigt ist, welche gegenüber der Achse 4 bzw. 5 in Richtung auf das Leertrum seitlich etwas versetzt und drehbar gelagert ist. Aus der Oberseite der Scheibe 13 ragt ein Mitnehmerstift 15, der in einer Ausnehmung 16 des Umlenkzahnrades 2 mit radialem Spiel eingreift, so daß die Scheibe 13 an der Drehbewegung des Umlenkzahnrades 2 teilnimmt.

In gleicher Weise ist auch unter dem Umlenkrad 3 eine solche Scheibe 13 angeordnet, wobei diese beiden Scheiben 13 als Träger für ein endloses, glattes Förderband 17 dienen. Zwischen der Scheibe 13 und dem Förderband 17 ist ein Stahlband 18 angeordnet, wobei das Förderband 17 aus Gummi bestehen und auf das Stahlband 18 aufvulkanisiert sein kann. Die Umlenkräder 2 und 3 und die Scheiben 13 können aus Kunststoff gefertigt sein.

Die Hauptachsen 4 und 5 der Umlenkräder 2 und 3 sind mittels Kugellager 19 an einem ortsfesten Führungskörper 20 gelagert. Auch die Nebenachsen 14 sind in diesem Führungskörper 20 mittels der Kugellager 21 drehbar gelagert. Im Führungskörper 20, der ebenfalls aus Kunststoff bestehen kann, ist auf der Oberseite eine obere endlose Führungsnut 22 und auf der Unterseite eine damit fluchtende endlose untere Führungsnut 23 eingearbeitet. Jeder Haken 9 weist einen Kupplungsteil 24 auf, an welchem jeweils zwei gegenüberliegende Führungsstifte 25 befestigt sind, welche in die obere Führungsnut 22 und die unter Führungsnut 23 eingreifen, so daß jeder Haken auf seiner Umlaufbahn am Führungskörper 20 zwangsgeführt ist.

Neben jedem Führungsstift 25 ist am Kupplungsteil 24 jedes Hakens 9 ein Laufrad 26 gelagert.

Diese Laufräder rollen auf glatten Laufbahnen 27, die neben den Führungsnuten 22 und 23 am Führungskörper 20 vorgesehen sind.

Die Haken sind somit gegen jede seitliche Bewegung gesichert und übertragen das Gewicht der transportierten Wurstkette auf den Führungskörper 20.

Am Kupplungsteil 24 jedes Hakens 9 ist - dem glatten Förderband 17 zugerichtet - ein Dauermagnet 28 befestigt.

Im Bereich des Fördertrums 10 ist der Kupplungsteil 24 jedes Hakens 9 mit der Kupplungsverzahnung 12 in die Außenverzahnung 7 der Umlenkräder 2 und 3 gedrückt, d.h., jeder Haken 9 ist im Bereich des Fördertrums 10 mit dem Transportband 1 formschlüssig verbunden.

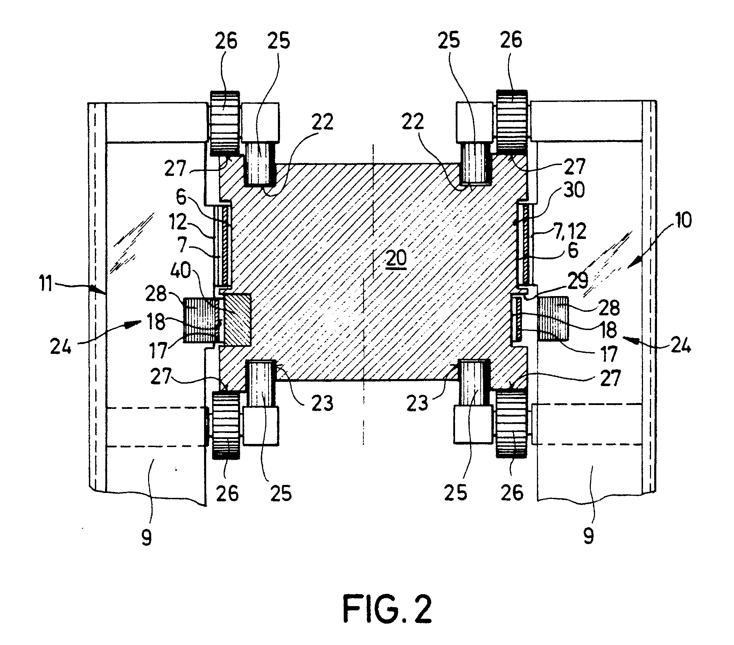

Das glatte Förderband 17 ist im Führungskörper 20 in einer Stütznut 29 geführt, während das Zahnriementransportband 1 in einer Nut 30 im Führungskörper abgestützt ist (Figur 2).

Die Führungsnuten 22 und 23 verlaufen im Umkehrbereich des Transportbandes 1 auf der Leertrumseite in einer Ausrückkurve 31 nach außen, so daß die Führungsnuten 22 und 23 im Anschluß daran gegenüber der durch das Zentrum der Achsen 4 und 5 gehenden Mittelebene seitlich nach außen versetzt sind (Fig 1). Am Ende des Leertrumes 11 gehen die Führungsnuten 22 und 23 in einer Einrückkurve 32 wieder in eine Kreisbahn über.

Dabei kommt der Magnet 28 am Kupplungsteil 23 jedes Hakens auf der Seite des Leertrums mit dem glatten Förderband 17 in Berührung, so daß auf diese Art und Weise ein Kraftschluß (Reibschluß) zwischen jedem Haken 9 und dem glatten Förderband 17 hergestellt wird, während die Kupplungsverzahnung 12 jedes Hakens in diesem Bereich des Leertrums außer Eingriff ist mit der Außenverzahnung 7 jedes Umlenkrades 2 bzw. 3.

Auf der Seite des Fördertrums 10 dagegen befindet sich der Magnet 28 im Abstand vom glatten Förderband 17, wobei jedoch die Kupplungsverzahnung 12 im Eingriff mit der Verzahnung des Umkehrrades 2 oder 3 steht.

Wie aus der Figur 1 ersichtlich ist, ist im Bereich des Leertrumes 11 vor der Einrückkurve 32 der Führungsnuten 22 und 23 eine insgesamt mit 33 bezeichnete Sperrvorrichtung angeordnet.

Diese Sperrvorrichtung 33 dient zum Vereinzelnen von Haken 9, die mit ihrer Kupplungsverzahnung 12 wieder in die Außenverzahnung 7 des Förderbandes formschlüssig eingekuppelt werden.

Die Sperrvorrichtung 33 besteht im gezeichneten Ausführungsbeispiel aus einem doppelarmigen Hebel 34, mit welchem ein Betätigungsarm 35 fest verbunden ist. Diese Teile der Sperrvorrichtung sind um die ortsfeste Achse 36 schwenkbar gelagert. An den Enden des doppelarmigen Hebels 34 sind Rollen 37 drehbar gelagert.

Am Ende des Betätigungsarmes 35 greift gelenkig eine Betätigungsstange 38 an, die mit dem Hubkern eines Elektromagneten 39 verbunden ist.

Der Elektromagnet 39 wird durch eine (nicht gezeichnete, da allgemein bekannte) Steuerungsvorrichtung so gesteuert, daß er den doppelarmigen Hebel 34 in dem erforderlichen Takt verschwenkt und dabei einen Haken 9 freigibt, den nächsten Haken aber wieder sperrt.

Der freigegebene Haken wird durch den Reibungsschluß zwischen dem Magneten 28 des Kupplungsteiles 24 des Hakens 9 und dem glatten Förderband 17 kraftschlüssig mitgenommen und in den Formschlußteil des Transportbandes in der oben geschilderten Art und Weise eingeschleust.

Die dabei erzielten Abstände zwischen den eingeschleusten Haken hängen somit von der Zeit ab, in welcher die Sperrvorrichtung 33 die auf dem Leertrum angespeicherten Haken im Takt freigibt.

Die auf dem Leertrum 11 gespeicherten Haken werden durch die Sperrvorrichtung 33 daran gehindert, die Bewegung des glatten Förderbandes 17 mitzumachen, d.h., sie gleiten auf diesem glatten Förderband, bis sie vereinzelt freigegeben werden. Für diesen Fall könnte die Antriebsscheibe 13 auch als Zaznrad und das Förderband 17 als Zahnriemen ausgebildet sein.

Die Anziehungskraft des Dauermagneten 28 kann dabei so gewählt werden, daß ein solches Gleiten auf dem glatten Förderband 17 ohne spürbare Abnützung erfolgt, die Mitnahme bei der Aufhebung der Sperre jedoch gewährleistet wird. Dabei ist die Verwendung eines glatten Förderbandes 17 aus Kunststoff vorteilhaft.

Das glatte Förderband 17 muß nicht unbedingt mit einem Stahlband 18 unterlegt sein.

Es würde auch genügen, wenn auf der Seite des Leertrumes 11 im Führungskörper 20 ein Stahlstab 40 angeordnet ist, wie dies in Figur 2 angedeutet ist.

Im Bereich des Leertrums 11, d.h. auf der Speicherseite des Transportbandes, können bei einer üblichen Länge der Vorrichtung etwa 50 Haken gespeichert werden, so daß auch sehr geringe Abstände zwischen den Haken eingestellt werden können. Bei größeren Hakenabständen müßten bei einer Speicherkapazität von etwa 50 Haken Haken entnommen bzw.in eine gesonderte Speicherbahn gebracht werden.

Wenn Minimalabstände zwischen den Haken gewünscht werden, kann das Leertrum 11 des Transportbandes 1 mit einer gesonderten Speicherbahn für zusätzliche Haken in Verbindung stehen, die dann nach Bedarf aus der Speicherbahn auf der Seite des Leertrumes 11 eingespeichert werden.

Dies ist auch dann zweckmäßig, wenn bei einer vereinfachten Ausbildung der Vorrichtung die Haken 9 nicht automatisch durch eine die Haken vereinzelnende Sperrvorrichtung mit dem Transportband gekuppelt werden, sondern von Hand.

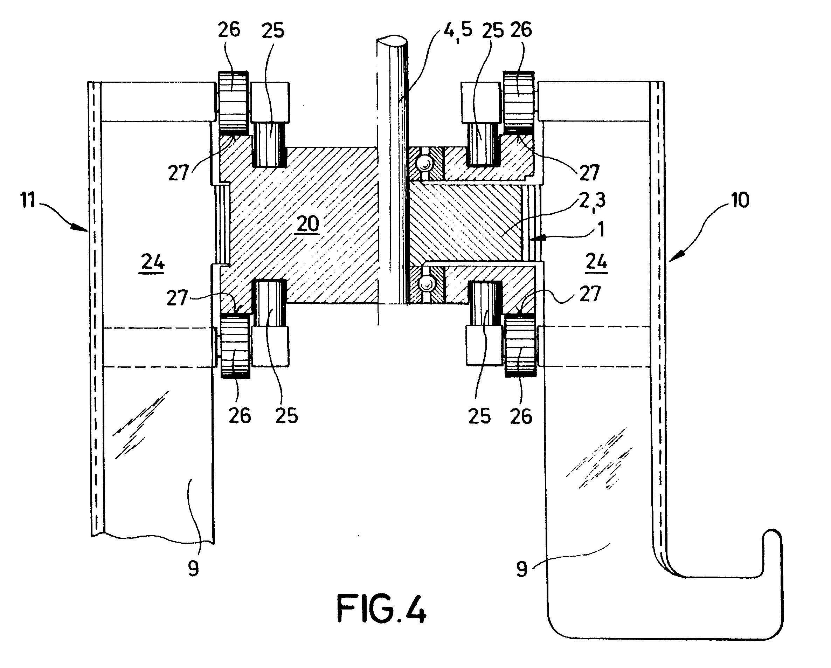

In der Figur 4 ist die Vorrichtung in einer vereinfachen Ausgestaltung im Querschnitt dargestellt.

Das Transportband 1 wird dort nur durch den innen und außen verzahnten Zahnriemen dargestellt, mit welchem der Kupplungsteil 24 jedes Hakens 9 auf dem gesamten Umlauf, also auch im Bereich des Leertrums 11 gekuppelt bleibt.

Um die Haken 9 in einem gewünschten Abstand am Transportband anzubringen, kann beispielsweise im Bereich des Leertrums 11 vor dem Umlenkrad 2 jede Führungsnut 22 und 23 mit einer seitlich nach außen offenen Ausnehmung versehen sein (nicht gezeichnet), so daß die Führungsstifte 25 an dieser Stelle über einen kurzen Bereich in den Führungsnuten 22 und 23 keine Außenführung aufweisen und infolgedessen ein Herausnehmen und Wiedereinsetzen der Haken erlauben.

Dies könnte aber auch dadurch ermöglicht werden, daß die Führungsstifte 25 gegen die Kraft einer Feder zurückgezogen werden können und so außer Eingriff mit den Führungsnuten 22 und 23 gebracht werden könnten.

Soweit das Transportband 1 um Umlenkräder geführt ist, die mittels aufrechter Achsen drehbar gelagert sind, könnten auch auf der Oberseite des Führungskörpers 20 zwei Führungsnuten nebeneinander angeordnet sein, in die dann zwei Führungsstifte jedes Hakens eingreifen, so daß die Haken in diesem Fall von oben eingesetzt werden könnten.

In Figur 4 ist im übrigen die vereinfachte Vorrichtung in unterschiedlichen Querschnitten gezeigt. Auf der linken Seite ist der Querschnitt zwischen den Umlenkrädern geführt, während der Querschnitt auf der rechten Seite durch das Zentrum eines Umlenkrades geht.

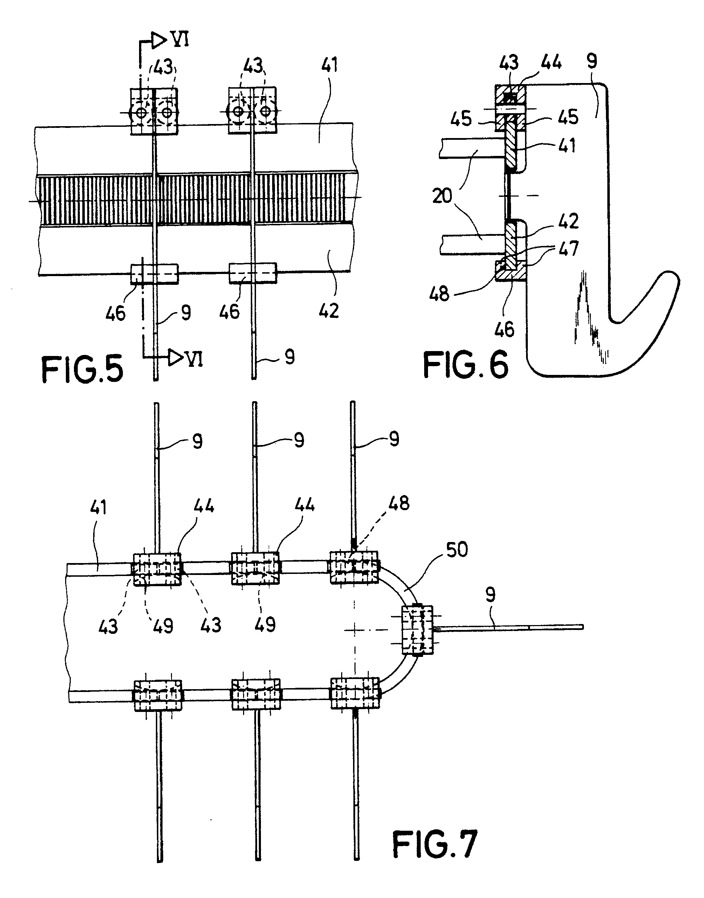

In Figur 5 ist eine Seitenansicht eines Teiles der Vorrichtung gezeigt, bei welcher die Führung für die Haken in einer anderen Konstruktion ausgeführt ist.

Wie aus den Figuren 5 und 6 ersichtlich ist, ist in diesem Fall am Führungskörper 20 ein oberes aufrechtes Flachprofil 41 und ein damit fluchtendes unteres aufrechtes Flachprofil 42 befestigt. Dem oberen Flachprofil 41 ist ein am Haken 9 angebrachtes nach unten offenes U-Profil 44 zugeordnet, das mit seinen Schenkeln 45 das obere Flachprofil 41 umgreift.

Im U-Profil 44 sind zwei hintereinander angeordnete Laufräder 43 drehbar gelagert, die sich auf der Oberseite des oberen Flachprofils 41 abstützen.

Ferner ist am Haken ein unteres U-Profil 46 befestigt, welches nach oben offen ist und mit seinen Schenkelenden 47 den unteren Bereich des unteren Flachprofils 42 umgreift.

Das untere U-Profil 46 weist eine innere Grundfläche auf, die eben ausgebildet ist und parallel zur Unterseite des unteren Flachprofils 42 verläuft.

Jeder Haken 9 stützt sich somit mittels der beiden Laufräder 43 auf dem oberen Flachprofil 41 ab. Er ist mit Hilfe der U-Profile 44 und 46 seitlich formschlüssig geführt.

Außerdem ist die vertikale Lage jedes Hakens auch dann gewährleistet, wenn der Haken im Bereich des Leertrums 11 außer Eingriff ist mit der Verzahnung des Formschlußbandes 10, was durch die Unterseite des unteren Flachprofiles 42 im Zusammenwirken mit der inneren Grundfläche des unteren U-Profils 46 erzielt wird.

Damit die U-Profile an den Umlenkstellen 50 der Flachprofile 41 und 42 dieser Führung folgen können, bildet der Führungskanal 48 an seiner Innenwand 49 einen Bogen, dessen Form der Umlenkung angepaßt ist (Figur 7).

**Ansprüche**

1. Vorrichtung zum Transport von in einer zusammenhängenden Wursthülle eingefüllten Würsten durch Aufhängen derselben in Schleifenform an Aufnahmehaken (9), die im Abstand zueinander mit einem endlosen, über zwei Umlenkräder (2 und 3) umlaufenden angetriebenen Transportband (1) verbunden sind, wobei die Haken (9) im Bereich des einen Trums des Transportbandes (1)(Fördertrum) mit den Wurstschleifen beladen sind und im Bereich des anderen Trums (Leertrum) leer zurücklaufen,
**dadurch gekennzeichnet,**
daß die Haken (9) mit dem Transportband (1) im Bereich des Fördertrums (10) formschlüssig und im Bereich des Leertrums (11) kraftschlüssig verbunden sind.

2. Vorrichtung nach Anspruch 1,
**dadurch gekennzeichnet,**
daß die Haken (9) bei ihrem Umlauf in einer endlosen feststehenden Führungsbahn zwangsgeführt sind, daß ferner das Transportband (1) aus einem Formschlußband mit nach außen ragenden Vorsprüngen und einem seitlich dazu versetzten glatten Kraftschlußband (17) besteht, wobei die Haken (9) im Bereich des Fördertrums (10) gegen das Formschlußband gepreßt und damit gekuppelt und im Bereich des Leertrums (11) außer Eingriff mit dem Formschlußband, jedoch an das Kraftschlußband (17) angedrückt sind.

3. Vorrichtung nach Anspruch 1 oder 2,
**dadurch gekennzeichnet,**
daß das Formschlußband als Zahnriemen mit nach außen ragenden Zähnen ausgebildet ist, daß jeder Haken (9) einen Kupplungsteil (24) aufweist, der im Bereich des Zahnriemens eine Kupplungsverzahnung (12) und im Bereich des glatten Kraftschlußbandes (17) einen Dauermagneten (28) aufweist, wobei das Kraftschlußband (17) durch ein Stahlband (18) unterstützt ist.

4. Vorrichtung nach mindestens einem der Ansprüche 1 bis 3,
**dadurch gekennzeichnet,**
daß der Bereich des Leertrums (11) als Speicher für Haken (9) dient, indem am Ende des Leertrums (11) vor dem Umlenkrad (2) eine Sperrvorrichtung (33) angeordnet ist.

5. Vorrichtung nach Anspruch 4,
**dadurch gekennzeichnet,**
daß die Sperrvorrichtung (33) als Vereinzeleinrichtung ausgebildet ist, die mit einer die Sperre (35,36) taktweise aufhebenden Steuerungseinrichtung zusammenwirkt.

6. Vorrichtung nach Anspruch 5,
**dadurch gekennzeichnet,**
daß die Steuerungseinrichtung einen Elektromagneten (39) aufweist, dessen Hubkern mit einem Sperrarm (35) in Verbindung steht.

7. Vorrichtung nach mindestens einem der Ansprüche 1 bis 6,
**dadurch gekennzeichnet,**
daß die Umlenkräder (2 und 3) auf aufrechten Achsen (4 und 5) befestigt sind und die endlose feststehende Führungsbahn in einem Führungskörper (20) eingearbeitet ist und aus einer oberen Führungsnut (22) und einer damit fluchtenden unteren Führungsnut (23) besteht, daß ferner der Kupplungsteil (24) jedes Hakens (9) zwei gegenüberliegend angebrachte Führungsstifte (25) aufweist, von welchem jeder mit der ihm zugeordneten Führungsnut (22 bzw. 23) im Eingriff ist.

8. Vorrichtung nach mindestens einem der Ansprüche 1 bis 7,
**dadurch gekennzeichnet,**
daß am Führungskörper (20) neben den Führungsnuten (22 und 23) glatte Laufbahnen (27) vorgesehen sind, auf welchen sich am Kupplungsteil (24) der Haken (9) gelagerte glatte Laufräder (26) abstützen.

9. Vorrichtung nach mindestens einem der Ansprüche 1 bis 6,
**dadurch gekennezichnet,**
daß die Umlenkräder (2 und 3) auf aufrechten Achsen (4 und 5) befestigt sind und die endlose feststehende Führungsbahn an einem Führungskörper (20) angebracht ist und aus einem oberen aufrechten Flachprofil (41) und einem damit fluchtenden unteren aufrechten Flachprofil (42) besteht, wobei sich auf dem oberen Flachprofil (41) jeweils ein Laufrad (43) abstützt, welche in einem nach unten offenen, am Haken (9) befestigten U-Profil (44) gelagert ist, das mit den Schenkelenden (45) das obere Flachprofil (41) umgreift, daß ferner am Haken (9) ein nach oben offenes U-Profil (46) befestigt ist, das mit den Schenkelenden (47) das untere Flachprofil (42) umgreift.

10. Vorrichtung nach Anspruch 9,
**dadurch gekennzeichnet,**
daß an jedem Haken (9) zwei hintereinander angeordnete Laufräder (43) gelagert sind.

11. Vorrichtung nach Anspruch 9 oder 10,
**dadurch gekennzeichnet,**
daß jedes der U-Profile (44 bzw. 46) einen Führungskanal (48) bildet, dessen Innenwand (49) zur Anpassung an die Umlenkungen (50) der U-Profile (44,46) bogenförmig ausgebildet ist.

12. Vorrichtung nach mindestens einem der Ansprüche 1 bis 11,
**dadurch gekennzeichnet,**
daß der Führungskörper (20) umlaufende Stütznuten (29 bzw. 30) zum Abstützen des Formschlußbandes und des Kraftschlußbandes aufweist.

13. Vorrichtung nach mindestens einem der Ansprüche 1 bis 12,
**dadurch gekennzeichnet,**
daß jedes Umlenkrad (2 bzw. 3) aus einem auf einer aufrechten Hauptachse (4 bzw.5) befestigten, das mit einer Innenverzahnung versehene Formschlußband antreibenden Zahnrad und einer das Kraftschlußband antreibenden Scheibe (13) besteht, die auf einer eigenen aufrechten Nebenachse (14) befestigt ist, die gegenüber der Hauptachse (4 bzw. 5) in Richtung zum Leertrum (11) versetzt ist.

14. Vorrichtung nach mindestens einem der Ansprüche 1 bis 13,
**dadurch gekennzeichnet,**
daß die Scheibe (13) mit einer Verzahnung versehen ist, welche in eine Innenverzahnung des Kraftschlußbandes (17) eingreift.

15. Vorrichtung nach mindestens einem der Ansprüche 1 bis 14,
**dadurch gekennzeichnet**
daß die Hauptachse (4 bzw.5) angetrieben ist und das Zahnrad mittels eines in eine Ausnehmung (16) der Scheibe (13) eingreifenden Mitnehmerstiftes (15) die Scheibe (13) in Drehung versetzt.

16. Vorrichtung zum Transport von in einer zusammenhängenden Wursthülle eingefüllten Würsten durch Aufhängen derselben in Schleifenform an Aufnahmehaken, die im Abstand zueinander mit einem endlosen, über zwei Umlenkräder umlaufenden angetriebenen Transportband verbunden sind, wobei die Haken im Bereich des einen Trums des Transportbandes (Fördertrum) mit den Wurstschleifen beladen sind und im Bereich des anderen Trums (Leertrum) leer zurücklaufen,
**dadurch gekennzeichnet,**
daß die Haken (9) bei ihrem Umlauf in einer endlosen feststehenden Führungsbahn zwangsgeführt sind, daß ferner das Transportband (1) als Zahnriemen mit nach außen ragenden Zähnen ausgebildet ist, daß jeder Haken (9) einen Kupplungsteil (24) mit einer Kupplungsverzahnung (12) aufweist, die mit dem Transportband zusammenwirkt, daß endlich jeder Haken (9) aus der endlosen feststehenden Führungsbahn herausnehmbar und wieder einsetzbar angebracht ist.

17. Vorrichtung nach Anspruch 16,
**dadurch gekennzeichnet,**
daß die Umlenkräder (2,3) auf aufrechten Achsen (4,5) befestigt sind und die endlose feststehende Führungsbahn in einem Führungskörper (20) eingearbeitet ist und aus einer oberen Führungsnut (22) und einer damit fluchtenden unteren Führungsnut (23) besteht, daß ferner der Kupplungsteil (24) jedes Hakens (9) zwei gegenüberliegend angebrachte Führungsstifte (25) aufweist, von welchen jeder mit der ihm zugeordneten Führungsnut (22 bzw. 23) im Eingriff ist, wobei ferner die Führungsnuten (22 und 23) im Bereich des Leertrums (11) mit nach außen gerichteten Ausnehmungen für das Ein- und Ausführen der Führungsstifte (25) versehen sind.

18. Vorrichtung nach Anspruch 16 oder 17,
**dadurch gekennzeichnet,**
daß am Führungskörper (20) neben den Führungsnuten (22 bzw. 23) Laufbahnen (27) vorgesehen sind, auf welchen sich am Kupplungsteil (24) der Haken (9) gelagerte Laufräder (26) abstützen.

19. Vorrichtung nach mindestens einem der Ansprüche 1 bis 18,
**dadurch gekennzeichnet,**
daß mindestens eines der Umlenkräder (2 bzw. 3) als Zahnrad ausgebildet ist, wobei das als Zahnriemen ausgebildete Transportband (1) auch mit einer Innenverzahnung (6) versehen ist, die mit dem Umlenkzahnrad kämmt.

FIG.1

EP 0 422 330 A1

FIG. 2

FIG.3

FIG.4

EP 0 422 330 A1

EP 0 422 330 A1

FIG.5

FIG.6

FIG.7

**Europäisches Patentamt**

# EUROPÄISCHER RECHERCHENBERICHT

Nummer der Anmeldung

## EP 90 10 8322

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A,D | FR-A-2 343 427 (HANDTMANN) <br> * Seite 11, Zeile 33 - Seite 12, Zeile 17; Figuren 11-13 & DE-A-2610315 * | 1,16 | A 22 C 11/00 <br> B 65 G 19/02 |
| A | WO-A-8 906 632 (ESKILSTUNA FABRIKS AB) <br> * Zusammenfassung ** Seite 1, Zeile 1 - Seite 3, Zeile 32; Figuren 1-4 * | 1,4,5,8, 10,16,18 | |
| A | FR-A-2 530 591 (DAVIDSON) <br> * Seite 4, Zeile 22 - Seite 6, Zeile 13 ** Seite 24, Zeilen 12 - 17; Figuren 6, 7, 9 * | 1,7,8, 16-19 | |
| A | EP-A-0 223 993 (KARL SCHNELL GMBH & CO) <br> * Zusammenfassung; Figuren 1, 3 * | 1,16 | |
| A | FR-A-2 586 010 (VERI ET REGIE NATIONALE DES USINES RENAULT) <br> * Seite 5, Zeile 28 - Seite 6, Zeile 29; Figur 4 * | 8-10 | |
| A | EP-A-0 259 920 (STORK PMT B.V.) | | |

| | | | RECHERCHIERTE SACHGEBIETE (Int. Cl.5) |
|---|---|---|---|
| | | | A 22 C <br> B 65 G <br> A 22 B |

Der vorliegende Recherchenbericht wurde für alle Patentansprüche erstellt

| Recherchenort | Abschlußdatum der Recherche | Prüfer |
|---|---|---|
| Den Haag | 21 Januar 91 | BODART P.A. |